# EUROPEAN PATENT SPECIFICATION

(11) **EP 0 725 004 B1**
(45) Date of publication and mention of the grant of the patent: **04.08.1999**
(21) Application number: 96101518.7
(22) Date of filing: 02.02.1996
(51) Int. Cl.: B62K 25/28

(54) **Suspension device for the rear wheel of a cycle**
Aufhängungsvorrichtung für das Hinterrad eines Zweirads
Dispositif de suspension pour la roue arrière d'un véhicule à deux roues

(30) Priority: 03.02.1995 JP 1720395
(43) Date of publication of application: 07.08.1996
(73) Proprietor: ÖHLINS RACING AB, 194 27 Upplands Väsby (SE); YAMAHA HATSUDOKI KABUSHIKI KAISHA, Iwata-shi Shizuoka-ken, 438 (JP)
(72) Inventor: Jansson, Lars, S-194 27 Upplands Väsby (SE); Gustafsson, Leif, S-194 27 Upplands Väsby (SE)
(74) Representative: Grünecker, Kinkeldey, Stockmair & Schwanhäusser Anwaltssozietät

(56) References cited:
- WO-A-86/03267
- FR-A- 510 404
- FR-A- 915 140
- GB-A- N8 175
- GB-A- 101 651
- US-A- 4 465 156
- US-A- 4 913 255

## Description

This invention relates to a suspension device for a rear wheel of a cycle, especially a motorcycle, comprising a leaf spring being disposed in a rear arm of said cycle, and a front end of said leaf spring being connected to a body frame, whereas a rear end of said leaf spring is connected to the rear arm of said cycle.

Such a suspension device is known from document GB-A-101 651. According to this document, the main frame of a cycle is provided with a pair of leaf springs mounted in cantilever form disposed substantially horizontally and with their free ends resting directly upon or within the lower members of the wheel frame at a point near the rear wheel axis.

Moreover, in further conventional rear suspension devices for motorcycles, a structure has been employed in which a damping unit comprising a coil spring and a telescopic damper is interposed between the rear arm and the vehicle body frame. In recent years, it has been a typical practice to employ one damping unit disposed, directly or by way of a link mechanism, between a position near the rear arm pivot and a position on the body frame below the fuel tank or below the seat (e.g. Japanese Unexamined Patent Publication Sho 59-120585).

However, the conventional arrangement has a problem of poor component layout efficiency because the damping unit takes up the central space in the vehicle where other vehicle-mounted components such as saddle bags or air cleaner and battery are difficult to be arranged.

In US-P-5 279 383, there is disclosed a suspension for a motor cycle comprising an elongated composite spring mounted at the front end on the lower front part of the frame and loaded at the rear end by one end of a link member the other end of which is mounted on a rear fork.

However, this disclosed leaf spring is not only large and bulky but is also unprotected so that damages on the leaf spring caused by flying stones or the like easily may occur.

However, all of the above-mentioned suspension devices always show suspension characteristics being pre-set in the course of manufacturing the cycles. Therefore, dependent on the respective weights of different riders and of different drive conditions, these suspension devices will show different suspension characteristics. For instance, a cycle, the rider of which having a very large weight, probably will show such a low suspension characteristic so that nearly no suspension will be provided. The same may occur for a cycle, the rider of which having a very light weight.

Accordingly, it is an objective of the present invention to provide an improved suspension device for a rear wheel of a cycle, especially a motorcycle, as indicated above which is easily adaptable to different load conditions and always ensures a reliable suspension operation and being not influenced by the environment.

According to the invention, this objective is solved for a suspension device for a rear wheel of a cycle, especially a motorcycle as indicated above in that the rear end is fixed by a first load adjustment mechanism for adjusting a static load acting on said rear end and/or that a second adjustment mechanism is linked to said front end of said leaf spring and said body frame for adjusting a static load acting on said front end

In order to ensure a sufficient and progressive suspension characteristic, according to another embodiment of the invention, the suspension device comprises a curved support member for gradually supporting said leaf spring upon bending same. This curved support member provides a bending point preferably in the middle of the leaf spring where said support member comes into contact with the leaf spring so that the leaf spring has a progressive characteristic in which the rear wheel load changes continuously between the fully extended state and the most compressed state of the leaf spring.

Sometimes it may be possible that the adjusting range is not sufficient. Therefore, it is advantageous to detachably connect said leaf spring as well as said curved support member, respectively, so that said leaf spring and/or said curved support member may be exchanged easily by a leaf spring and/or curved support member having different characteristics.

The further improvement of a suspension device and/or characteristic may be achievable by providing a damper between said front end and said body frame, whereby said damper may be a rotary damper or a cylindrical damper.

Further advantageous embodiments of the invention are laid down in further dependent claims.

In the first embodiment of the invention,_besides other features the structure for connecting the front end of the leaf spring to the body frame is preferably the one in which the leaf spring is movable relative to the body frame. For example, a structure may be employed in which one component is connected to the other through a link or an elongate hole, or the front end top surface is pressed for rolling or sliding against a roller or slider attached to the body frame.

With the rear wheel suspension device for cycles or motorcycles according to the second and third embodiment of the invention, when shocks are applied from the road to the rear wheel, the leaf spring is bent as it comes into contact with the arcuate support portion as the rear arm moves upward. As a result, the bending point on the leaf spring is formed continuously, the progressive characteristic of the leaf spring is made more smooth, and the spring characteristic is further improved. In this case, since the arcuate support portion for the leaf spring is disposed in the rear arm, no separate layout space is required in spite of a large size of the support portion. Furthermore, since the leaf spring and the arcuate portion are disposed in the rear arm, they are protected by the rear arm and there is no possibility of catching flying stones from the road between the arcuate support portion and the leaf spring.

Since the arcuate support portion is detachable, the arcuate support portion may be replaced according to required characteristics and spring characteristics may be optionally selected.

Further , since the rotary damper is employed and disposed between the right and left arm bodies of the rear arm, the rotary damper is disposed at a high position so that road clearance is made large.

Furthermore, since the rotary damper housing is pivoted on the vehicle body frame and the swing shaft of the piston lever is connected through a link to the rear arm, the housing itself constitutes part of the link mechanism. As a result, the lever ratio may be freely set and the number of components is reduced with a simple structure in which only one link is added.

In the following, the present invention is explained in greater detail with respect to several embodiments thereof in conjunction with accompanying drawings, wherein:
FIG. 1 is an enlarged partial view of the rear arm for explaining the rear wheel suspension device for motorcycles according to one embodiment;
FIG. 2 is an enlarged partial view of the rotary damper of the above embodiment;
FIG. 3 is a cross-sectional view of the rotary damper of the above embodiment;
FIG. 4 is a right side view of a motorcycle to which the above embodiment device is applied;
FIG. 5 is an enlarged partial view of the rear arm for explaining the rear wheel suspension device for motorcycles by way of a further embodiment;
FIG. 6 is a cross-sectional back view of the rear end portion of the arm body of the embodiment according to Fig. 5; and
FIG. 7 is a right side view of the rear wheel suspension device for motorcycles by way of another embodiment.

Although the following description of advantageous embodiments refers to a suspension device for motorcycles, the inventive suspension device also is applicable to cycles, for example, mountain bikes.

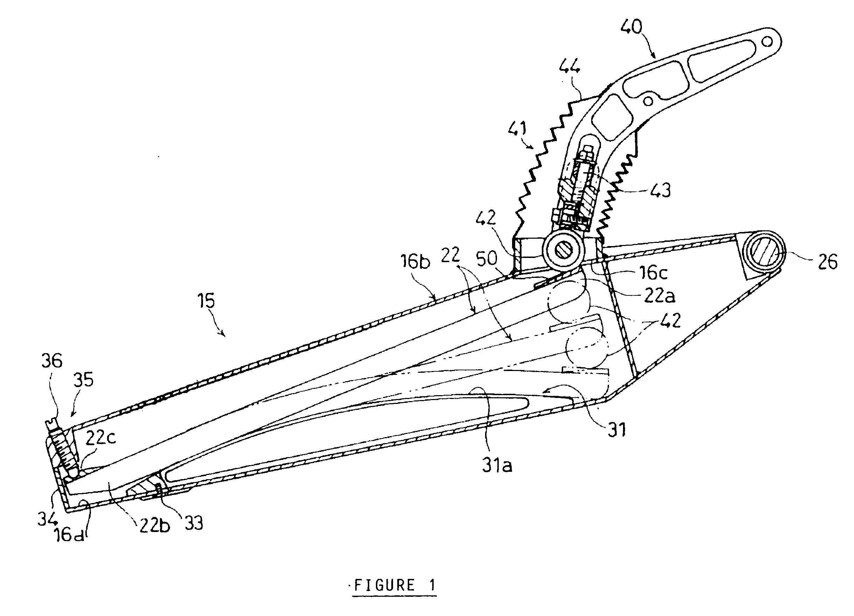

FIGS. 1 to 4 are drawings for explaining the rear wheel suspension device for motorcycles by way of a first embodiment.

Those drawings show; a motorcycle 1 to which the rear suspension device of this invention is applied, and a vehicle body frame 2 of a double cradle type constituted as described below: To the front end of the front halves 4a of tank rails 4 is connected a head pipe 3 To the rear halves 4b are connected paired right and left rear arm brackets 5. To the lower ends of the right and left rear arm brackets 5 are connected to the rear ends of rear halves 6b of right and left down tubes 6 The upper ends of the front halves 6a of the right and left down tubes 6 are connected to the head pipe 3 . A fuel tank 10 is mounted on the tank rails 4 of the vehicle body frame 2 . A seat 11 is mounted on the rear part of the tank rails 4.

An engine (12) is mounted in a cradle formed with the tank rails 4, the rear arm brackets 5, and the down tubes 6.

On the lower ends of the rear arm brackets 5 are pivoted the front end of a rear arm 15 by means of a pivot shaft 26 for up and down swinging. The rear arm 15 is constituted with right and left arm bodies 16a, 16b with their rear end portions behind the pivot shaft 26 connected and secured to each other through a cross pipe 17 having a square cross section. A rear wheel 21 is journaled by a wheel shaft 20 penetrating the rear ends of the right and left arm bodies 16a, 16b and secured to them. The right arm body 16a is of an oblong square in cross section in the vehicle width direction.

The rear wheel suspension device 18 representing the feature of this embodiment is disposed between The rear arm 15 and the vehicle body frame 2 . The rear wheel suspension device 18 is provided with a rotary damper 19 for restricting irregular vertical vibration of the rear wheel 21 , and a leaf spring 22 for attenuating shocks transmitted from the road to the rear wheel 21 .

Of course, it is possible to use a suspension device without a rotary or cylindrical (as explained later) damper. Although such a suspension device is not shown in the figures, the structure for connecting the front end 22a of the leaf spring 22 to the body frame 2 may be one in which the leaf spring 22 is moveable relative to said body frame 2. For example, a structure may be employed in which one component is connected to the other through a link or an elongate hole or the front end top surface is pressed for rolling or sliding against a rolling or slider attached to the body frame.

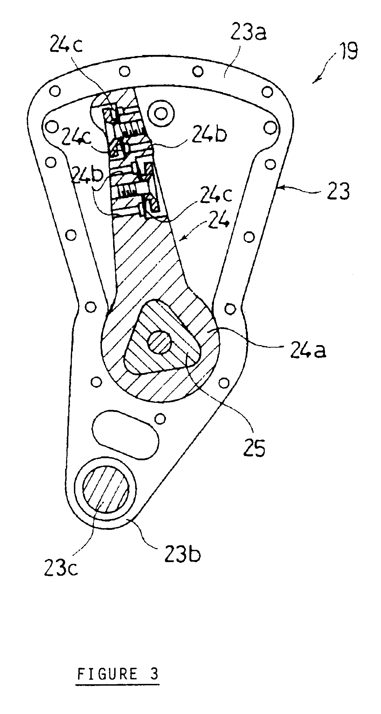

As shown in FIG. 3, the rotary damper 19 comprises a housing 23 constituted with a housing body 23a of a generally sector shape in side view and a cover (removed in FIG. 3) attached to the housing body 23a , a piston lever 24 of a generally blade shape housed for free swinging in the housing 23 and defining two oil clambers within the housing 23 , and a swing shaft 25 inserted in and secured integrally to the lower end portion 24a of the pistol lever 24 . The swing shaft 25 is supported on the housing 23 . In the piston lever 24 is formed an oil passage 24b making connection between the two oil chambers and opened and closed by a valve 24c . When the piston lever 24 is swung about the swing shaft 25 , working oil in one oil chamber presses and opens the valve 24c and flows into the other oil chamber to produce a damping force of the damper 19 .

Alternatively, it may be possible to provide this oil passage (24b) in the piston lever (24) and/or in a wall of the housing (23).

The rotary damper 19 is disposed between the front end portions of the right and left arm bodies 16a, 16b of the rear arm 15 and supported, for free swing on a bracket 28 secured to the lower end portion of the rear arm bracket 5 , by a shaft 23c inserted through a lower end boss portion 23b of the housing 23 . Thus, the housing 23 itself constitutes part of a link mechanism swinging about the boss portion 23b To each of end portions of the swing shaft 25 extending outward is connected one end of each of curved links 29 . The other end of the each link 29 is connected for free rotation through a shaft 30a to a support bracket 30 secured to the underside of the cross pipe 17 .

The leaf spring 22 is disposed in the right arm body 16b in the longitudinal direction of the vehicle. In this embodiment, the leaf spring is disposed in the right arm body 16b only because a rear wheel drive chain is disposed near the left arm body 16a . However, the leaf spring may also be disposed in the left arm body 16a as a matter of course. The leaf spring 22 is made of glass fiber reinforced plastic (GFRP) for example to be of a light weight. The leaf spring 22 is preferably made of a band-shaped member with its lateral cross section uniform or approximately uniform over its entire length so that its manufacture is facilitated for mass production. The lateral dimension of the leaf spring 22 is made to be approximately equal to that of the arm body 16b . This determines the lateral position of the leaf spring 22 .

The bottom wall of the right arm body 16b is formed flat. An arcuate support member 31 having a flat bottom surface and an arcuate top surface is detachably disposed on the inside bottom surface of the arm body 16b . The arcuate support body 31 is restrained from displacing in the lateral direction by contact with right and left inner walls of the arm body 16b . The arcuate top surface of the arcuate support member 31 serves as a pillow 31a for continuously coming into contact with the underside of the leaf spring 22 . The rear end of the arcuate support member 31 is secured with a screw 33 screw-inserted from the bottom surface of the arm body (16b) so that the arcuate support member 31 is restricted from displacing in the longitudinal direction. An opening 16d is formed at the rear end of the arm body 16b for inserting and removing the leaf spring 22 and the arcuate support member 31 . The opening 16d is provided with a detachable cap 34 to prevent foreign matter from entering inside.

The rear end portion 22b of the leaf spring 22 is pressed from above and held by a rear portion initial load adjustment mechanism 35 . The load adjustment mechanism 35 is for setting a static load in the state of without a rider by pressing a spherical engagement recess 22c formed at the rear end portion of the leaf spring 22 by the tip of an adjustment bolt 36 screw-inserted from the top surface of the arm body 16 .

The front end portion 22a of the leaf spring 22 is held and pressed upward by a front portion initial load adjustment mechanism 41 . In the portion of the load adjustment mechanism 41 where a roller 42 comes into contact, a steel plate 50 with a taper is disposed to restrict friction of the leaf spring 22 .

The front portion initial load adjustment mechanism 41 is pivoted on the rear arm bracket 5 so that its angle relative to the bracket 5 is adjustable, and located at the lower end of a support arm 40 which can be fixed at the adjusted angle. The spring load in the static state without a rider is adjusted by moving the roller 42 up and down by turning a bolt 43 screw-inserted into the support arm 40 . The angle of the support arm 40 is adjusted by the same mechanism as a support arm 75 of a second embodiment which will be described later. By the angle adjustment, the position where the roller 42 comes into contact with the leaf spring 22 changes.

The roller 42 is located at an insertion hole 16c formed on the top surface of the arm body 16b so as to face the interior of the arm body (16). The area from around the insertion hole 16c to the lower portion of the support arm 40 is sealed by a rubber bellows 49 to shut out foreign matter.

With the embodiment device 18 , when the rear wheel 21 rolls over a road bump for example and produces a shock, the rear arm 15 is swung upward by the shock and the leaf spring 22 is also swung upward. At this time, since upward movement of the front end portion 22a of the leaf spring 22 is restricted by the roller 42 attached to the support arm 40 , the leaf spring 22 is bent as shown in FIG. 1. In this case, the bend begins from the rear end portion 22b of the leaf spring 22 and moves forward along the arcuate surface of the pillow 31a . When the rear arm 15 is further swung upward, the leaf spring 22 is bent so as to follow the entire length of the arcuate surface of the pillow 31a .

With the embodiment, since the leaf spring 22 deflects in the arcuate shape as described above, the so-called progressive characteristic of the leaf spring 22 is made more smooth to further improve the spring characteristic. Although the arcuate support member 31 of this embodiment is made in a large size in approximately the same length with that of the leaf spring 22 , since the dead space in the rear arm 15 is utilized, there is no layout problem.

In this embodiment, the leaf spring 22 and the arcuate support member (31) are disposed in the arm body 16b , the area around the insertion hole (16c) for the roller 42 is sealed by the rubber bellows 49 , and the rear end opening 16d of the arm body 16 is closed by the cap 34 . As a result, the leaf spring 22 and the pillow 31a are protected by the arm body 16b , flying stones from the road do not enter the space between the pillow 31a and the leaf spring 22 , and the durability is improved accordingly.

The attachment work of the leaf spring 22 is very simple: The leaf spring 22 is inserted through the opening 16d of the arm body 16b , the front end portion 22a is pressed and held by the roller 42 , and the rear end portion 22b of the leaf spring 22 is pressed and held by the adjustment bolt 36 . The lateral positioning of the leaf spring 22 is determined by the inner surfaces of the arm body 16b . The attachment and positioning work of the arcuate support member 31 is also very simple: The arcuate support member 31 is inserted and its rear end portion is tightened with a screw 33 so that longitudinal and lateral displacements of the arcuate support member are restrained. Here, since the bottom surface of the arcuate support member 31 and the bottom wall surface of the arm body 16 are flat, the insertion of the arcuate support member 31 is very easy. Attachment work efficiency is high also in this regard.

Removal of the arcuate support member 31 is also very simple: By removing the cap 34 and the screw 33 , the arcuate support member 31 is easily taken out so that it may be replaced with pillows of different curvatures to meet requirements for different characteristics. The progressive characteristic can be freely selected: For example, the characteristic may be made soft at the beginning of the stroke and harder toward the end of the stroke.

With this embodiment, since the rotary damper 19 is employed and disposed between the front end portions of the right and left arm bodies 16a, 16b of the rear arm 15 , the rotary damper 19 is positioned high to increase the road clearance. Since the housing 23 of the rotary damper 19 is pivoted on the rear arm bracket 5 , and the swing shaft 25 of the piston lever 24 is connected through the link 29 to the rear arm 15 , the structure is simplified with only one additional link 29 , resulting in a reduced number of components.

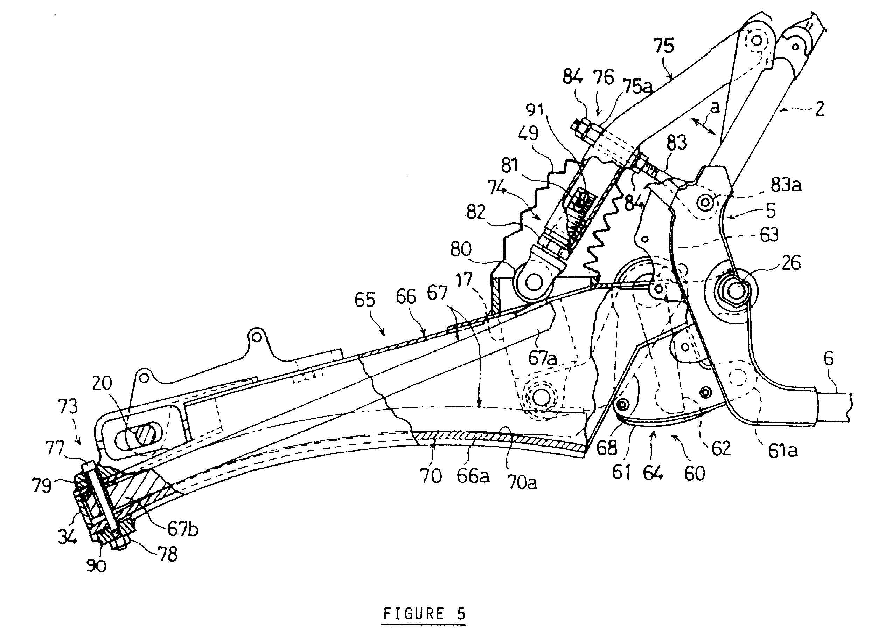

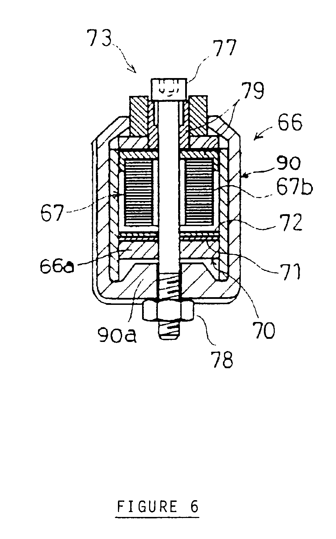

FIGs. 5 and 6 are drawings for explaining the rear wheel suspension device for motorcycles by way of a second embodiment

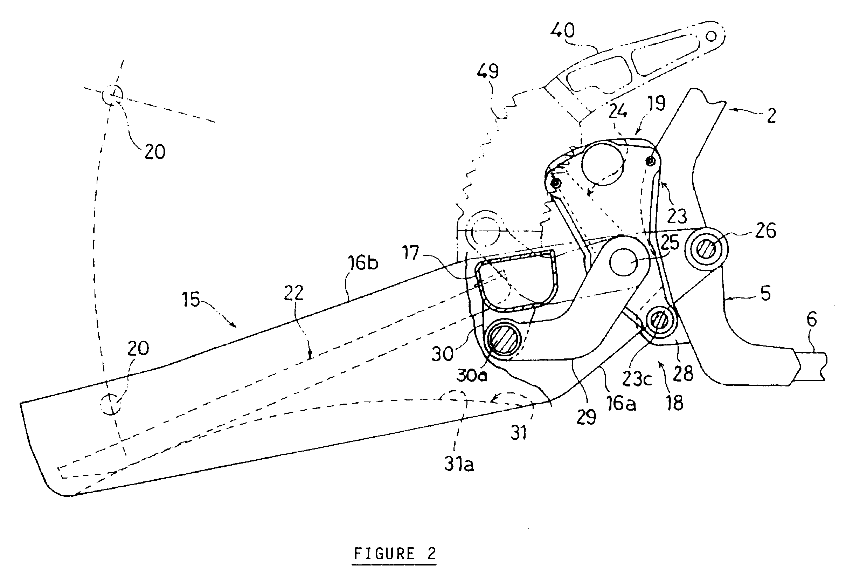

In those drawings, the sane symbols as those in FIGs. 1 and 2 denote the same or corresponding parts.

The rear wheel suspension device 60 of this embodiment is basically of the same constitution as that of the first embodiment and comprises; a rotary damper 64 comprising a housing 61 , a piston lever 62 disposed for free sliding in the housing 61 , and a swing shaft 63 connected to the piston lever 62 ; an arm body 66 of a rear arm 65 , and a leaf spring 67 disposed in the arm body 66 .

In the rotary damper 64 , the piston lever 62 is disposed vertically from the swing shaft 63 . The boss portion 61a of the housing 61 is pivoted on the rear arm bracket 5 . The swing shaft 63 is connected through a link 68 to the cross pipe 17 of the rear arm 65 .

The bottom wall 66a of the arm body 66 is formed in an arcuate form swelling upward. An arcuate support portion 70 is formed by laminating a thin steel sheet 71 and a plastic sheet 72 over the top surface of the bottom wall 66a . The arcuate surface of the arcuate support portion 70 serves as a pillow 70a for continuously coming into contact with the underside of the leaf spring 67 . Here, the steel sheet 71 is for preventing wear of the bottom wall 66a made of aluminum, and the plastic sheet 72 is for restricting wear of the leaf spring 67 .

This embodiment is provided with the first and second adjuster mechanisms 73, 74 for adjusting initial loads by adjusting the pressing forces on the rear end portion 67b and on the front end portion 67a of the leaf spring 67 ; and the third adjuster mechanism 76 for adjusting the angle (a) of the cylindrical support arm 75 supporting the roller 80 relative to the vehicle body frame.

The first adjuster mechanism 73 is constituted as follows: A reinforcement bracket 90 is secured to the rear end outer surface of the arm body 66 . A hole is formed though the top wall of the arm body 66 leaf spring 67 , and the bottom wall of the arm body 66 . An adjustment bolt 77 is inserted in the through hole and screw-inserted into the thick-walled portion 90a of the bracket 90 , and a locknut 78 is engaged with the downward projecting portion of the adjustment bolt 77 . A slide collar 79 is interposed between the head of the adjustment bolt 77 and the leaf spring 67 so that the initial load can be set by loosening the locknut 78 and turning the adjustment bolt 77 .

With the second adjuster mechanism 74 , the initial load is set by moving a rod 81 and a roller 80 supported at the end of the rod 81 up and down by turning an adjustment nut 82 rotatably inserted in the support arm 75 and engaged with the rod 81 . A stop pin 91 which is engage-stopped by the support arm 75 prevents the rod 81 from turning.

The third adjuster mechanism 76 is constituted as follows: The upper end of the support arm 75 is pivoted on the rear arm bracket 5 . A cylindrical boss portion 75a is fixed in the middle of the support arm 75 in the direction approximately normal to the direction of the length of the support arm 75 . An adjustment bolt 83 is inserted in the boss portion 75a and the bolt head 83a is pivoted on the rear arm bracket 5 . Nuts 84, 84 are disposed on both end faces of the boss portion 75a . By turning the nuts 84 , the angle of the support arm 75 relative to the vehicle body is set. Thus, the contact point position of the roller 80 on the leaf spring 67 is adjusted.

With the embodiment device 60 , the progressive characteristic of the leaf spring is made smooth as the leaf spring 67 undergoes arcuate elastic deformation as the rear arm 65 moves upward. The same effects as those with the embodiments described above are obtained without the problems of layout space and damages caused by flying stones.

Since the rotary damper 64 is disposed between the right and left arm bodies (66) and the housing 61 is pivoted on the rear arm bracket 5 , the road clearance is made large and the structure is simplified. Thus, the same effects as those of the above embodiments are obtained in this regard.

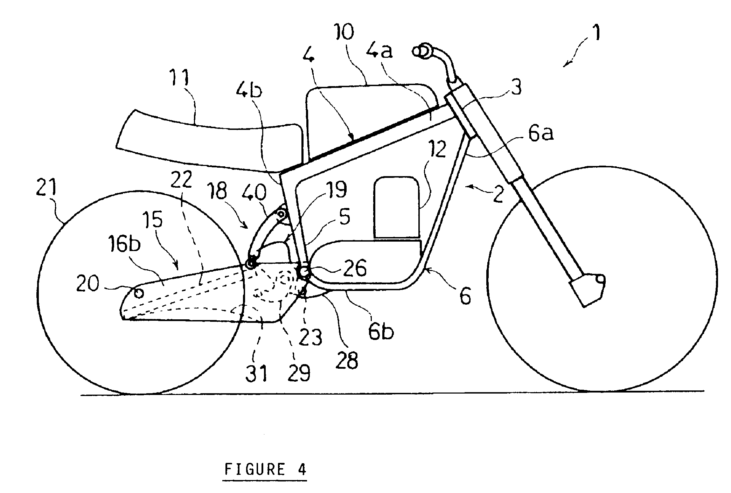

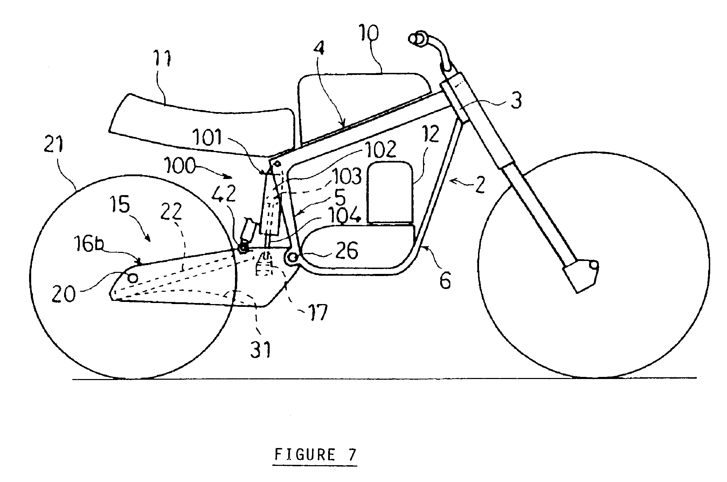

FIG. 7 is a drawing for explaining the rear wheel suspension device for motorcycles by way of a third embodiment. In the drawing, the same symbols as those in FIG. 4 denote the same or corresponding parts.

In the rear suspension device 100 of this embodiment, the leaf spring 22 and the support portion 31 are disposed in the rear arm 15 , and a cylindrical damper 101 is employed as a damper for restricting vertical vibration of the rear wheel 21 . The cylindrical damper 101 comprises a cylinder 102 , a piston 103 disposed in the cylinder 101 for axial sliding, a piston rod 104 fixed to the piston 103 with the piston rod 104 projecting out of the cylinder 102 . The top end of the cylinder 102 is connected to the upper end portion of the rear arm bracket 5 while the projecting end of the piston rod 104 is connected to the cross pipe 17 of the rear arm 15 .

This embodiment also provides the same effects as those provided by the embodiments described above.

As described above, with the rear wheel suspension device for motorcycles according to one preferred embodiment, a band-shaped leaf spring is employed as the damping spring which is disposed longitudinally in the rear arm, the front end of the leaf spring is secured to the vehicle body frame, the rear end of the leaf spring is secured to the rear arm, and the arcuate support portion is disposed so as to cone into contact with the leaf spring as the rear arm rises and to bend and support the leaf spring. As a result, not only the problem of flying stones caught between the support portion and the leaf spring is eliminated but also the progressive characteristic of the leaf spring is made smooth as the bending point on the leaf spring is formed continuously in an arcuate shape to further improve the spring characteristic. Furthermore, there is no necessity for securing a separate layout space in spite of the large size of the pillow.

According to another embodiment , since the arcuate support portion is detachably attached to the interior of the rear arm, the support portion may be optionally replaced according to required characteristic, providing the effect of free selection of the spring characteristic.

Further , since a rotary damper may be employed and disposed between the arm bodies of the rear arm, the housing is pivoted on the vehicle body frame, and the swing shaft of the piston lever is connected to the rear arm, such effects are obtained as the large road clearance and the simple link mechanism.

Furthermore , since a cylindrical damper may be employed, the cylindrical housing is pivoted on the vehicle body frame, and the piston rod fixed with the piston is connected to the rear arm, the effect of simple structure is obtained by eliminating the link mechanism.

## Claims

1. A suspension device (18;60;100) for a rear wheel (21) of a cycle, especially a motorcycle (1), comprising a leaf spring (22;67) being disposed in a rear arm (15;65) of said cycle (1), and a front end (22a;67a) of said leaf spring (22;67) being connected to a body frame (2), whereas a rear end (22b;67b) of said leaf spring (22;67) being connected to the rear arm (15;65) of said cycle (1),
**characterized in that** the rear end (22b;67b) is fixed by a first load adjustment mechanism (35;73) for adjusting a static load acting on said rear end (22b;67b) and/or that a second adjustment mechanism (41;74) is linked to said front end (22a;67a) of said leaf spring (22;67) and said body frame (2) for adjusting a static load acting on said front end (22a;67a).

2. A suspension device according to claim 1, **characterized by** a curved support member (31; 70) for gradually supporting said leaf spring (22; 67) upon bending same.

3. A suspension device according to claim 1 or 2, **characterized in that** said leaf spring (22;67) is detachably connected to the rear arm (15;65) of said cycle (1).

4. A suspension device according to claim 2 or claim 3 or 2, **characterized in that** said curved support member is detachably connected to the rear arm (15;65) of said cycle (1).

5. A suspension device according to at least one of the preceding claims 1 to 4, **characterized in that** a damper (19;64;101) is provided between the rear arm (15;65) and said body frame (2).

6. A suspension device according to claim 5, **characterized in that** said damper is a first rotary damper (19) comprising a housing (23), a piston lever (24) pivoted for swinging in and defining two oil chambers within said housing (23) being pivoted through a shaft (23c) on the frame body (2), an oil passage (24b) and a swing shaft (25) inserted and integrally secured to a lower end portion (24a) of said piston lever (24) and supported in said housing (23).

7. A suspension device according to claim 5, **characterized in that** said damper is a second rotary damper (64) comprising a housing (61) a piston lever (62) disposed vertically from a swing shaft (63) for free sliding in said housing (61), being pivoted through a boss portion (61a) on the frame body (2) whereby said swing shaft (63) is connected to a cross pipe (17) of said rear arm (65) by a link (68).

8. A suspension device according to claim 5, **characterized in that** said damper is a cylindrical damper (101) comprising a cylinder (102), a piston (103) disposed in said cylinder (102) for said reciprocation, a piston rod (104) fixed to said piston (103) projecting out of said cylinder (102), the top end of which being connected to a rear arm bracket (5) of said rear arm (65) and said projecting end of said piston rod (104) is connected to a cross pipe (17) of said rear arm (15).

9. A suspension device according to at least one of the preceding claims 1 to 8, **characterized in that** the front end (22a) of the leaf spring (22;67) being connected to the body frame (2) by a link means, or through an elongated hole (16c) formed on the top surface of said rear arm (15;65) by a roller connection or a slider connection.

10. A suspension device according to at least one of the preceding claims 1 to 9, **characterized by** a third adjustment mechanism (76) connected between said second adjustment mechanism (41;74) and said body frame (2) for adjusting an angle (a) defined by said second adjustment mechanism (41;74) and said body frame (2).

## Patentansprüche

1. Aufhängungsvorrichtung (18;60;100) für ein Hinterrad (21) eines Zweirades, speziell eines Motorrades (1), mit einer Blattfeder (22;67), die in einem hinterem Arm (15;65) des Zweirades (1) angeordnet ist, wobei ein vorderes Ende (22a;67a) der Blattfeder (22;67) mit einem Fahrgestellrahmen (2) verbunden ist, während ein hinteres Ende (22b;67b) der Blattfeder (22;67) mit dem hinterem Arm (15;65) des Zweirades (1) verbunden ist, **dadurch gekennzeichnet, daß** das hintere Ende (22b;67b) durch einen ersten Lasteinstellmechanismus (35;73) befestigt ist, um eine auf das hintere Ende (22b,67b) einwirkende statische Last einzustellen, und/oder daß ein zweiter Einstellmechanismus (41;74) mit dem vorderen Ende (22a;67a) der Blattfeder (22;67) und dem Gehäuserahmen (2) verbunden ist, um eine auf das vordere Ende (22a;67a) einwirkende statische Last einzustellen.

2. Aufhängungsvorrichtung nach Anspruch 1, **dadurch gekennzeichnet, daß** ein gebogenes Stützteil (31;70) zum weitergehenden Abstützen der Blattfeder (22;67) beim Biegen derselben vorgesehen ist.

3. Aufhängungsvorrichtung nach Anspruch 1 oder 2, **dadurch gekennzeichnet, daß** die Blattfeder (22;67) mit dem hinteren Arm (15; 65) des Zweirades (1) abnehmbar verbunden ist.

4. Aufhängungsvorrichtung nach Anspruch 2 oder Anspruch 3 und 2, **dadurch gekennzeichnet, daß** der gebogene Stützteil mit dem hinteren Arm (15;65) des Zweirades (1) abnehmbar verbunden ist.

5. Aufhängungsvorrichtung nach mindestens einem der vorangehenden Ansprüche 1 bis 4, **dadurch gekennzeichnet, daß** ein Dämpfer (19;64;101) zwischen dem hinteren Arm (15; 65) und dem Gehäuserahmen (2) vorgesehen ist.

6. Aufhängungsvorrichtung nach Anspruch 5, **dadurch gekennzeichnet, daß** der Dämpfer ein erster Drehdämpfer (19) ist, der ein Gehäuse (23), einen Kolbenhebel (24), der zum Schwenken in zwei Ölkammern innerhalb des Gehäuses (23) und zum Bestimmen dieser beiden Ölkammern durch eine Welle (23c) an dem Gehäusekörper (2) geschwenkt wird, einen Ölkanal (24b) und eine in einen unteren Endabschnitt (24a) des Kolbenhebels (24) eingesetzte und integral daran gesichert angebrachte Schwenkwelle (25) umfaßt, die in dem Gehäuse (23) abgestützt ist.

7. Aufhängungsvorrichtung nach Anspruch 5, **dadurch gekennzeichnet, daß** der Dämpfer ein zweiter Drehdämpfer (64) ist, der ein Gehäuse (61) und einen vertikal zu einer Schwenkwelle (63) zum freien Gleiten in dem Gehäuse (61) angeordneten Kolbenhebel umfaßt, der durch einen Klotzabschnitt (61a) an dem Rahmenkörper (2) geschwenkt wird, wodurch die Schwenkwelle (63) mit einem Querrohr (17) des hinteren Arms (75) über eine Verbindung (68) verbunden ist.

8. Aufhängungsvorrichtung nach Anspruch 5, **dadurch gekennzeichnet, daß** der Dämpfer ein zylindrischer Dämpfer (101) ist, der einen Zylinder (102), einen in dem Zylinder (102) für die Hin- und Herbewegung untergebrachten Kolben (103) und eine an dem Kolben (103) befestigte Kolbenstange (104) umfaßt, die aus dem Zylinder (102) vorsteht, wobei dessen oberes Ende mit einer Hinterarmlasche (5) des hinteren Armes (65) verbunden ist und das vorstehende Ende der Kolbenstange (104) mit einem Querrohr (17) des hinteren Arms (15) verbunden ist.

9. Aufhängungsvorrichtung nach mindestens einem der vorangehenden Ansprüche 1 bis 8, **dadurch gekennzeichnet, daß** das vordere Ende (22a) der Blattfeder (22;67) mit dem Gehäuserahmen (2) durch ein Verbindungsmittel oder durch eine an der oberen Fläche des hinteren Arms (15;65) ausgebildete Öffnung (16c) durch eine Walzen- oder Gleiterverbindung verbunden ist.

10. Aufhängungsvorrichtung nach mindestens einem der vorangehenden Ansprüche 1 bis 9, **gekennzeichnet durch** einen dritten Einstellmechanismus (76), der zwischen dem zweiten Einstellmechanismus (41; 74) und dem Gehäuserahmen (2) zum Einstellen eines Winkels (a) angeschlossen ist, der durch den zweiten Einstellmechanismus (41; 74) und dem Gehäuserahmen (2) bestimmt wird.

## Revendications

1. Dispositif de suspension (18; 60; 100) destiné à une roue arrière (21) d'un cycle, en particulier un motocycle (1), comprenant un ressort à lame (22; 67) qui est disposé dans un bras arrière (15; 65) dudit cycle (1), et une extrémité avant (22a; 67a) dudit ressort à lame (22; 67) qui est connectée à un cadre (2), alors qu'une extrémité arrière (22b; 67b) dudit ressort à lame (22; 67) est connectée au bras arrière (15; 65) dudit cycle (1),
caractérisé en ce que l'extrémité arrière (22b; 67b) est fixée à l'aide d'un premier mécanisme de réglage de charge (35; 73) destiné à régler une charge statique agissant sur ladite extrémité arrière (22b; 67b) et/ou en ce qu'un second mécanisme de réglage (41; 74) est relié à ladite extrémité avant (22a; 67a) dudit ressort à lame (22; 67) et au dit cadre (2) afin de régler une charge statique agissant sur ladite extrémité avant (22a; 67a).

2. Dispositif de suspension selon la revendication 1, caractérisé par un élément de support courbe (31; 70) destiné à supporter de manière progressive ledit ressort à lame (22; 67) en fonction de la courbure de celui-ci.

3. Dispositif de suspension selon la revendication 1 ou la revendication 2, caractérisé en ce que ledit ressort à lame (22; 67) est connecté de manière amovible au bras arrière (15; 65) dudit cycle (1).

4. Dispositif de suspension selon la revendication 2 ou les revendications 3 et 2, caractérisé en ce que ledit élément de support courbe est connecté de manière amovible au bras arrière (15; 65) dudit cycle (1).

5. Dispositif de suspension selon au moins l'une des revendications précédentes 1 à 4, caractérisé en ce qu'un amortisseur (19; 64; 101) est disposé entre le bras arrière (15; 65) et ledit cadre (2).

6. Dispositif de suspension selon la revendication 5, caractérisé en ce que ledit amortisseur est un premier amortisseur rotatif (19) comprenant un logement (23), un levier de piston (24) pivotant de manière à osciller dans celui-ci et définissant deux chambres à huile à l'intérieur dudit logement (23) qui peut pivoter par l'intermédiaire d'un axe (23c) situé sur le cadre (2), un passage d'huile (24b) et un axe oscillant (25) introduit dans une partie d'extrémité inférieure (24a) dudit levier de piston (24) et fixé de manière intégrée à celle-ci, et supporté dans ledit logement (23).

7. Dispositif de suspension selon la revendication 5, caractérisé en ce que ledit amortisseur est un second amortisseur rotatif (64) comprenant un logement (61), un levier de piston (62) disposé verticalement à partir d'un axe oscillant (63) afin de coulisser librement dans ledit logement (61), pouvant pivoter par l'intermédiaire d'une partie de bossage (61a) située sur le cadre (2) grâce à laquelle ledit arbre oscillant (63) est connecté à un tube transversal (17) dudit bras arrière (65) à l'aide d'une biellette (68).

8. Dispositif de suspension selon la revendication 5, caractérisé en ce que ledit amortisseur est un amortisseur cylindrique (101) comprenant un cylindre (102), un piston (103) disposé dans ledit cylindre (102) à des fins de mouvement alternatif, une tige de piston (104) fixée au dit piston (103) saillant hors dudit cylindre (102), dont l'extrémité supérieure est connectée à un support de bras arrière (5) dudit bras arrière (65) et ladite extrémité en saillie de ladite tige de piston (104) est connectée à un tube transversal (17) dudit bras arrière (15).

9. Dispositif de suspension selon au moins l'une des revendications précédentes 1 à 8, caractérisé en ce que l'extrémité avant (22a) du ressort à lame (22; 67) est connectée au cadre (2) par des moyens de biellette, ou au travers d'un orifice allongé (16c) formé sur la surface supérieure dudit bras arrière (15; 65) au moyen d'une connexion à galet ou d'une connexion à coulissement.

10. Dispositif de suspension selon au moins l'une des revendications précédentes 1 à 9, caractérisé par un troisième mécanisme de réglage (76) connecté entre ledit second mécanisme de réglage (41; 74) et ledit cadre (2) afin de régler un angle (a) défini par ledit second mécanisme de réglage (41; 74) et ledit cadre (2).
